# EUROPÄISCHE PATENTSCHRIFT

(11) **EP 3 405 359 B1**
(45) Veröffentlichungstag und Bekanntmachung des Hinweises auf die Patenterteilung: **26.05.2021**
(21) Anmeldenummer: 18705573.6
(22) Anmeldetag: 07.02.2018
(51) Int. Cl.: B60J 7/02, B60J 7/043

(54) **ANORDNUNG MIT EINEM DECKEL FÜR EIN FAHRZEUGDACH**
OPEN ROOF CONSTRUCTION WITH PANEL FOR A VEHICLE
AGENCEMENT AVEC COUVERCLE POUR TOIT DE VÉHICULE

(30) Priorität: 27.03.2017 DE 102017106510
(43) Veröffentlichungstag der Anmeldung: 28.11.2018
(73) Patentinhaber: Webasto SE, 82131 Stockdorf (DE)
(72) Erfinder: KNÖPFLE, Julian, 82131 Stockdorf (DE); GERING, Sebastian, 82131 Stockdorf (DE)
(74) Vertreter: Epping - Hermann - Fischer
(86) Internationale Anmeldenummer: PCT/EP2018/053077
(87) Internationale Veröffentlichungsnummer: WO 2018/177635

(56) Entgegenhaltungen:
- DE-A1- 4 006 160
- DE-A1-102007 061 091
- DE-C1- 3 735 686
- DE-C1- 10 116 620
- DE-U1-202010 012 974

## Beschreibung

Die Erfindung betrifft eine Anordnung mit einem Deckel für ein Fahrzeugdach, insbesondere eine Anordnung für ein sogenanntes Spoilerdach.

Derartige Anordnungen mit einem Deckel für ein Fahrzeugdach dienen beispielsweise dazu, den Deckel ausgehend von einer Schließstellung zum Verschließen einer Dachöffnung zum Öffnen durch eine Ausstellmechanik zunächst in seinem hinteren Bereich anzuheben und dann nach hinten in eine Offenstellung zu verschieben.

DE 20 2010 012 974 U1 betrifft eine Offendachkonstruktion für ein Fahrzeug, aufweisend eine Dachöffnung in einem stationären Dachabschnitt und ein Paneel, welches in einer Längsrichtung des Fahrzeugs bewegbar ist zum Öffnen und Schließen der Dachöffnung, wobei eine Anhebe- und Führungseinrichtung bereitgestellt ist zum Anheben des Paneels bezüglich des stationären Dachabschnitts und zum Erlauben der Bewegung des Paneels in der Längsrichtung, wobei die Anhebe- und Führungseinrichtung erstens aufweist ein Führungselement, welches Führungsteile hat, die mit einer Führungsbahn des Paneels zusammenwirken, zweitens aufweist einen Kipphebel, von dem ein erstes Ende schwenkbar mit dem Führungselement an einem ersten Schwenkgelenk verbunden ist und von dem ein entgegengesetztes, zweites Ende im Wesentlichen in der Längsrichtung bewegbar angetrieben ist, und drittens aufweist einen Schwenkhebel, von dem ein erstes Ende schwenkbar mit dem Führungselement an einem zweiten Schwenkgelenk verbunden ist.

DE 37 35 686 C1 betrifft ein Fahrzeugdach mit einer Abdeckung, die an ihrer Vorderkante in seitlichen Führungsschienen, die sich unter einer festen Dachfläche erstrecken, verschiebbar geführt ist und die zusätzlich durch Hubhebel an den Führungsschienen abgestützt ist. Die Hubhebel sind an einem Ende mit der entsprechenden Führungsschiene und am anderen Ende mit der Abdeckung verbunden und sowohl in Fahrzeuglängsrichtung übersetzbar als auch um parallele Achsen schwenkbar.

Es ist wünschenswert, eine Anordnung mit einem Deckel für ein Fahrzeugdach anzugeben, die einen einfachen und sicheren Aufbau ermöglicht.

Gemäß einer Ausführungsform der Erfindung weist eine Anordnung die Merkmale des Anspruchs 1 auf. Die Anordnung weist den Deckel für das Fahrzeugdach auf. Die Anordnung weist eine Führungsschiene auf. Die Führungsschiene erstreckt sich entlang einer Fahrzeuglängsrichtung. Die Anordnung weist eine Ausstellstange auf. Die Ausstellstange ist relativ zu der Führungsschiene entlang der Fahrzeuglängsrichtung verschiebbar. Die Anordnung weist einen bezüglich der Fahrzeuglängsrichtung hinteren Ausstellhebel auf. Der hintere Ausstellhebel ist schwenkbar mit dem Deckel gekoppelt. Der Ausstellhebel ist mit einem ersten Führungselement in einer ersten bezüglich der Führungsschiene ortsfesten Kulisse geführt. Der Ausstellhebel ist mit einem zweiten Führungselement in einer zweiten bezüglich der Führungsschiene ortsfesten Kulisse geführt. Der Ausstellhebel ist mit einem dritten Führungselement in einer dritten bezüglich der Führungsschiene ortsfesten Kulisse geführt. Der Ausstellhebel ist mit der Ausstellstange gekoppelt. Die Ausstellstange und der Ausstellhebel sind mittels eines Drehlagers miteinander gekoppelt. Der Ausstellhebel weist das erste Führungselement, das zweite Führungselement und das drittes Führungselement auf.

Die Verbindung zwischen dem Ausstellhebel und der Ausstellstange mittels der Führungselemente und der jeweiligen Kulissen ermöglicht die Vermeidung einer plötzlichen Laständerung am Deckel ausgelöst durch Druck, der beispielsweise durch die Dichtung an dem Deckel oder durch äußere Einflüsse wie zum Beispiel einer Windlast anliegt. Die Laständerung ist beispielsweise durch eine Vorspannung am Deckel mit verursacht. Die Vorspannung des Deckels in Z-Richtung (Vertikale) wird beim Öffnen des Deckels kontrolliert abgebaut. Schlaggeräusche können so reduziert werden, die durch die Laständerung verursacht werden. Somit werden Geräuschemissionen verringert.

Herkömmlich kann die Vorspannung in Z-Richtung zu einem schlagartigen Springen des Ausstellhebels führen, wodurch ein Impuls auf die Ausstellstange übertragen wird. Die Ausstellstange kann auch als Betätigungshebel bezeichnet werden. Dies kann ein hörbares Geräusch verursachen.

Insbesondere aufgrund der Verbindung der Ausstellstange mittels des Drehlagers zum Ausstellhebel und dem ersten Führungselement, das in der ersten Kulisse geführt ist, wird anmeldungemäß die plötzliche Laständerung weitestgehend verhindert. Somit ist es auch möglich, auf herkömmlich vorgesehene zusätzliche Elemente wie Gummibremsen zu verzichten. Um zum einen Z-Toleranzen an der Deckelhinterkante zu kompensieren und die Steigung der ersten Kulisse bei gleichem Kabelweg ausreichend flach gestalten zu können, ist der Ausstellhebel mit dem dritten Führungselement in der dritten Kulisse geführt und somit relativ zur Führungsschiene verschiebbar.

Insbesondere ist das erste Führungselement während dem Öffnen und Schließen des Deckels zeitweise in der ersten Kulisse geführt und zeitweise außerhalb der Kulisse angeordnet. Ausgehend von der Schließposition des Deckels ist das erste Führungselement zunächst in der ersten Kulisse geführt und verlässt die erste Kulisse, nachdem der Ausstellhebel zumindest teilweise verschwenkt wurde.

Beim Verschwenken des Ausstellhebels relativ zur Führungsschiene um eine Drehachse, die durch das dritte Führungselement festgelegt wird, wird der Ausstellhebel zusätzlich entlang der Fahrzeuglängsrichtung relativ zur Führungsschiene verschoben. Die Drehachse des Ausstellhebels, die durch das dritte Führungselement festgelegt wird, verschiebt sich relativ zur Führungsschiene während dem Verschwenken des Ausstellhebels relativ zur Führungsschiene.

Die erste Kulisse weist gemäß Ausführungsformen einen Verlauf auf, bei dem sich ein Abstand zwischen der ersten Kulisse und einem Boden der Führungsschiene in der Fahrzeuglängsrichtung nach hinten in einem Abschnitt vergrößert. Somit ist eine sanft ansteigende Kulisse ausgebildet, die eine verlässliche Gegenkraft gegen die Vorspannung in Z-Richtung aufgrund beispielsweise des Dichtungsdrucks ermöglicht. Somit kann eine plötzliche Laständerung verhindert werden. Beim Schließen des Deckels ist es mittels der ersten Kulisse somit zusätzlich möglich, eine Kraft entgegen der Z-Richtung auf dem Hebel auszuwirken, sodass der Deckel auch gegen die Dichtung verlässlich in die Schließposition bewegt werden kann.

Gemäß Ausführungsformen weist die zweite Kulisse einen Verlauf auf, der in der Fahrzeuglängsrichtung nach hinten zunächst gleichgerichtet zur Fahrzeuglängsrichtung verläuft und dann schräg zur Fahrzeuglängsrichtung. Die zweite Kulisse ermöglicht zusammen mit dem zweiten Führungselement eine Verriegelung entlang der Fahrzeuglängsrichtung des Ausstellhebels bei geöffnetem Deckel.

Gemäß einer Ausführungsform weist die dritte Kulisse einen Verlauf auf, der gleichgerichtet zur Fahrzeuglängsrichtung verläuft. Die dritte Kulisse ermöglicht eine Bewegung des Ausstellhebels entlang der Führungsschiene während dem Verschwenken. Insbesondere weist die dritte Kulisse einen in Fahrzeuglängsrichtung hinteren Anschlag auf. Der hintere Anschlag begrenzt eine Bewegung des dritten Führungselements in die Fahrzeuglängsrichtung. Somit ist ein begrenzter Weg für eine translatorische Verschiebung des dritten Führungselements definiert.

Der Ausstellhebel verfährt nicht zusammen mit dem Deckel in die Offen-Position. Der Deckel ist relativ zu dem Ausstellhebel verschiebbar, nachdem der Ausstellhebel ausgeschwenkt wurde. Der Ausstellhebel wird insbesondere nur während dem Verschwenken der Deckelhinterkante für die Lüfterstellung beziehungsweise aus der Lüfterstellung in die Schließstellung entlang der Führungsschiene bewegt. Von der Lüfterstellung in die Offen-Position beziehungsweise von der Offen-Position in die Lüfterposition wird der Ausstellhebel relativ zur Führungsschiene ortsfest gehalten und der Deckel relativ zum Ausstellhebel und der Führungsschiene bewegt. Insbesondere wird der Ausstellhebel während der Bewegung zwischen Offen-Position und Lüfterposition von dem zweiten und dem dritten Führungselement ortsfest an der Führungsschiene gehalten. Der Deckel wird insbesondere nach Art eines sogenannten Spoilerdachs bewegt.

Der Ausstellhebel ist gemäß Ausführungsformen mittels eines Koppelelements schwenkbar mit dem Deckel gekoppelt. Der Ausstellhebel weist ein erstes und ein gegenüberliegendes zweites Ende auf. Das Koppelelement ist an dem ersten Ende angeordnet. Das zweite und das dritte Führungselement sind an dem zweiten Ende angeordnet.

Gemäß Ausführungsformen sind eine Drehachse des Drehlagers und eine Längsachse des ersten Führungselements gleich. Der Ausstellhebel ist mit der Ausstellstange an der Stelle gekoppelt, an der auch das erste Führungselement ausgebildet ist. Somit ist auch die Ausstellstange in der ersten Kulisse geführt. Zudem muss an der Ausstellstange insbesondere keine Kulissenbahn vorgesehen werden.

Gemäß Ausführungsformen ist die Ausstellstange relativ zur Führungsschiene verschwenkbar. Die Ausstellstange folgt mit einem Ende, mit dem sie mit dem Ausstellhebel gekoppelt ist, bei Verschwenken des Ausstellhebels der Bewegung in die Z-Richtung.

Gemäß weiteren Ausführungsformen weist die Anordnung einen Zwischenhebel auf. Der Zwischenhebel ist an einem Ende mit der Ausstellstange drehbar gekoppelt. Der Zwischenhebel ist mit einem gegenüberliegenden Ende an dem Drehlager mit dem Ausstellhebel gekoppelt. Somit ist es möglich, die Ausstellstange während der Bewegung entlang der Führungsschiene nicht zu verschwenken und mit einem Gleiter entlang der Führungsschiene zu führen. Der Zwischenhebel folgt der Z-Bewegung beim Verschwenken des Ausstellhebels.

Weitere Vorteile, Merkmale und Weiterbildungen ergeben sich aus den nachfolgenden in Verbindung mit den Figuren erläuterten Beispielen. Gleiche, gleichartige und gleichwirkende Elemente können dabei mit den gleichen Bezugszeichen versehen sein.

Es zeigen:
Figur 1 eine schematische Darstellung eines Fahrzeugs gemäß einem Ausführungsbeispiel,
Figuren 2 und 3 schematische Darstellungen einer Anordnung gemäß einem Ausführungsbeispiel,
Figuren 4 bis 8 schematische Darstellungen einer Anordnung gemäß einem Ausführungsbeispiel, und
Figuren 9 und 10 schematische Darstellungen einer Anordnung gemäß einem Ausführungsbeispiel.

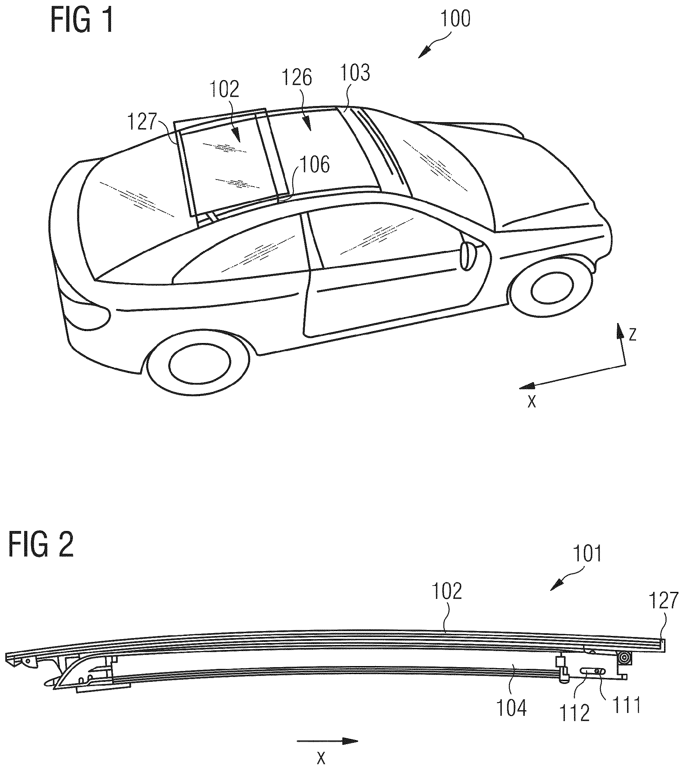

Figur 1 zeigt eine schematische Ansicht eines Kraftfahrzeugs 100. Das Kraftfahrzeug weist ein Fahrzeugdach 103 auf. In dem Fahrzeugdach 103 ist eine Dachöffnung 126 ausgebildet. Die Dachöffnung 126 ist mittels eines verschiebbaren Deckels 102 wahlweise verschließbar oder zumindest teilweise freigebbar. Der Deckel 102 ist Teil eines sogenannten Spoilerdachs. In Richtung der Fahrzeuglängsrichtung X weist der Deckel 102 eine Hinterkante 127 auf. Zum Freigeben der Dachöffnung wird ausgehend von der Schließposition des Deckels 102 die Hinterkante 127 zunächst in Z-Richtung angehoben. Nachfolgend wird der Deckel 102 entlang der X-Richtung verschoben. Dabei verschiebt sich der Deckel 102 relativ zu einem Hinteren Ausstellhebel 106, wie nachfolgend noch näher erläutert wird. die Hinterkante 127 ist somit nach Art des Spoilerdachs nicht unmittelbar am Fahrzeugdach 103 abgestützt, wenn der Deckel 102 vollständig geöffnet ist. Ein Spoilerdach ist beispielsweise in der DE 10 2014 109 698 beschrieben.

Entlang der X-Achse sind beidseitig der Dachöffnung 126 Führungsschienen 104 (beispielsweise Figur 2) angeordnet. Nachfolgend wird die anmeldungsgemäße Anordnung anhand einer Seite der Dachöffnung 126 erläutert. Die gegenüberliegende Seite ist korrespondierend dazu aufgebaut.

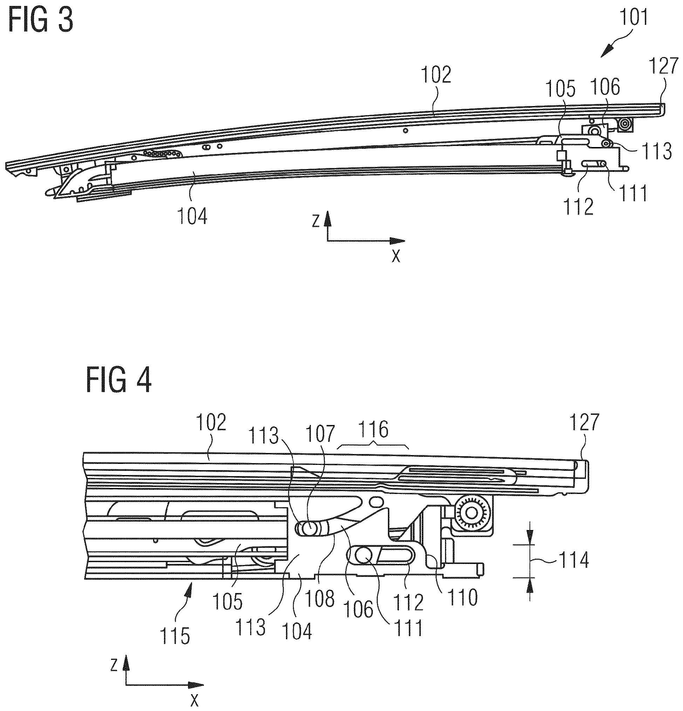

Figuren 2 und 3 zeigen eine Anordnung 101 zum Anheben und Absenken der Hinterkante 127 des Deckels 102. Die Führungsschiene 104 erstreckt sich entlang der X-Richtung. An dem in X-Richtung hinteren Ende ist ein hinterer Ausstellhebel 106 angeordnet. Das hintere Ende der Führungsschiene 104 ist im betriebsfertigen Zustand im Fahrzeug 100 der Fahrzeugheckscheibe zugewandt und der Windschutzscheibe abgewandt.

Der Ausstellhebel 106 ist mit einer Ausstellstange 105 verbunden. Die Ausstellstange 105 ist wiederum mit einem nicht explizit dargestellten Antrieb gekoppelt. Der Antrieb umfasst beispielsweise einen Schlitten, der in der Führungsschiene 104 geführt ist und relativ zur Führungsschiene 104 entlang der X-Richtung verschiebbar ist. Der Schlitten ist beispielsweise mittels eines Antriebskabels mit einem Elektromotor oder einem anderen Antrieb verbunden. Figur 2 zeigt den Deckel 102 in der Schließposition. Figur 3 zeigt den Deckel 102 in der Lüfterstellung, in der die Hinterkante 127 im Vergleich zur Schließstellung in Z-Richtung angehoben wurde.

Nachfolgend wird in Verbindung mit den Figuren 4 bis 8 das Anheben der Hinterkante 127 beschrieben. Das Absenken der Hinterkante 127 zum Schließen des Deckels 102 erfolgt korrespondierend in umgekehrter Reihenfolge.

Der Ausstellhebel 106 weist ein erstes Führungselement 107, ein zweites Führungselement 109 und ein drittes Führungselement 111 auf. Die Führungselemente sind beispielsweise jeweils bolzenförmig ausgebildet, sodass sie in Kulissen und/oder Führungsbahnen geführt werden können.

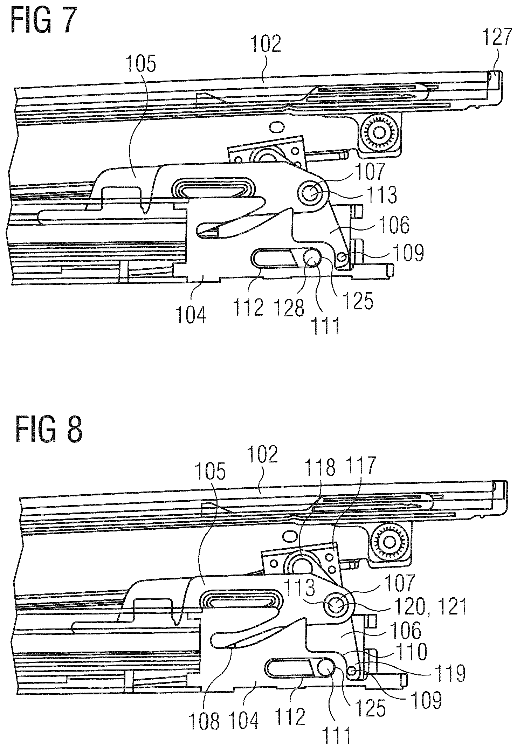

Das erste Führungselement 107 ist in einer ersten Kulisse 108 geführt. Die erste Kulisse 108 ist ortsfest zur Führungsschiene 104 ausgebildet. Die erste Kulisse weist einen Verlauf auf, der in X-Richtung zunächst im Wesentlichen eben und dann leicht ansteigend verläuft. Folglich vergrößert sich ein Abstand 114 der ersten Kulisse zu einem Boden 115 der Führungsschiene 104 in X-Richtung. Das dritte Führungselement 111 ist in einer dritten Kulisse 112 geführt. Die dritte Kulisse 112 ist ebenfalls ortsfest an der Führungsschiene 104 ausgebildet. Die dritte Kulisse 112 verläuft im Wesentlichen entlang der X-Richtung. Somit ermöglicht die dritte Kulisse 112 eine Translation des dritten Führungselements 111 innerhalb der dritten Kulisse 112. Eine zweite Kulisse 110, die auch als Führungsbahn ausgebildet ist, dient zur Führung des zweiten Führungselements 109. Auch die zweite Kulisse 110 ist ortsfest an der Führungsschiene 104 ausgebildet. Die Ausstellstange 105 ist mittels eines Drehlagers 113 mit dem Ausstellhebel 106 verbunden. Das Drehlager 113 ist im gezeigten Ausführungsbeispiel an dem ersten Führungselement 107 ausgebildet. Folglich sind eine Drehachse 120 (Figur 8) des Drehlagers 113 und eine Längsachse 121 (Figur 8) des ersten Führungselements 107 im Wesentlichen denkungsgleich. Die Ausstellstange 105 ist mit ihrem hinteren Ende ebenfalls in der ersten Kulisse 108 geführt.

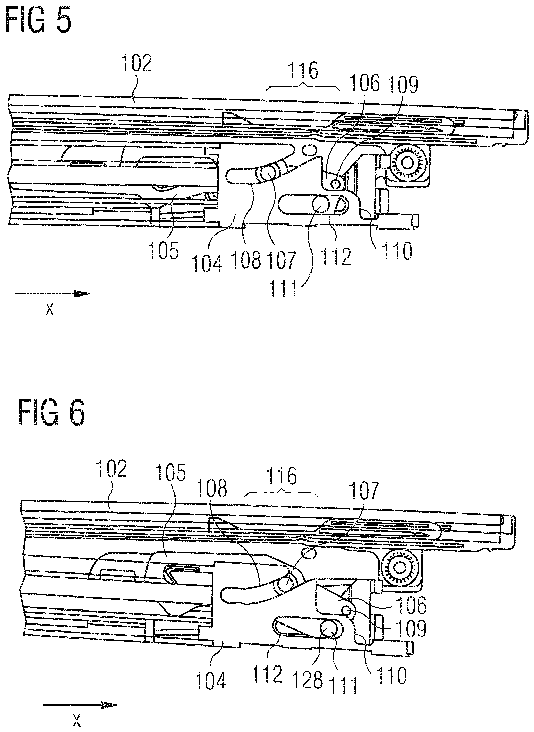

Beim Verschieben der Ausstellstange 105 in X-Richtung wird der Ausstellhebel 106 zunächst ebenfalls in X-Richtung verschoben. Dies ermöglicht die zweite Kulisse 110 sowie die dritte Kulisse 112. Auch die erste Kulisse ist in einem Abschnitt, der diesem Bewegungsablauf zugeordnet ist, im Wesentlichen entlang der X-Richtung ausgerichtet und lediglich ganz leicht ansteigend (Übergang von Figur 4 zu Figur 5).

Wird die Ausstellstange 105 weiter in X-Richtung verschoben, wie in Figur 6 dargestellt, wird das erste Führungselement 107 in einem ansteigenden Abschnitt 116 der ersten Kulisse 108 geführt. Somit wird der Ausstellhebel bereits leicht verschwenkt relativ zur Führungsschiene 104. Entsprechend ist die zweite Kulisse 110 ausgebildet. Die dritte Kulisse 112 ermöglicht ein weiteres Verschieben des dritten Führungselements 111 in X-Richtung. Somit wird der Ausstellhebel 106 während dem Verschwenken um seine Drehachse 128 in X-Richtung verschoben. Die Drehachse 128 verschiebt sich relativ zur Führungsschiene 104 innerhalb der dritten Kulisse 112. Aufgrund der Verschiebung des Ausstellhebels 106 in X-Richtung und der Führung des ersten Führungselements 107 in der ersten Kulisse 108 ist eine kontrollierte Ableitung des Dichtungsdrucks möglich, der in Z-Richtung gegen den Deckel 102 drückt.

Die erste Kulisse 108 ist insbesondere im Abschnitt 116 vergleichsweise flach ausgebildet, sodass die Kraft in Z-Richtung, die von der Dichtung auf den Deckel 102 ausgelegt wird, keine Blockade des ersten Führungselements 107 in der ersten Kulisse 108 zur Folge hat. Die drehbare Verbindung zwischen der Ausstellstange 105 und dem Ausstellhebel 106 sowie der Führung des ersten Führungselements 107 in der ortsfesten, sanften Kulissenbahn 108 vermindert eine plötzliche Laständerung ausgelöst durch den Dichtungsdruck. Der Ausstellhebel 106 ist mittels dem dritten Führungselement 111 und der dritten Kulisse 112 entlang der X-Richtung verschiebbar gelagert, um Z-Toleranzen an der Deckelhinterkante zu kompensieren. Die Z-Toleranzen sind beispielsweise verursacht durch X-Toleranzen am Antriebsschlitten. Alternativ oder zusätzlich wird mehr Weg entlang der X-Richtung für eine flachere Kulisse 108 ermöglicht.

Im weiteren Bewegungsablauf (Figur 7) erreicht das dritte Führungselement einen hinteren Anschlag 125 der dritten Kulisse 112. Somit ist die X-Bewegung des dritten Führungselements 111 in X-Richtung begrenzt. Der Ausstellhebel 106 wurde aufgrund der Bewegung der Ausstellstange 105 in X-Richtung weiter um die Drehachse 128 verschwenkt, um die Deckelhinterkante 127 in Z-Richtung zu bewegen. Das zweite Führungselement 109 ist in einen vertikalen Bahnabschnitt der zweiten Kulisse 110 überführt worden. Somit ist der Ausstellhebel 106 in der dargestellten verschwenkten Position entlang der X-Richtung verriegelt.

Die endgültige Lüfterposition des Deckels 102 ist in Figur 8 dargestellt. Der Ausstellhebel 106 ist vollständig nach oben verschwenkt worden. Dabei wurde auch die Ausstellstange 105 relativ zur Führungsschiene 104 in Z-Richtung verschwenkt. Die Ausstellstange 105 und der Ausstellhebel 106 wurden relativ zueinander verschwenkt um die Drehachse 120 des Drehlagers 113. Entlang der X-Richtung ist der vollständig ausgeklappte Ausstellhebel 106 mittels des zweiten Führungselements 109 und des dritten Führungselements 111 verriegelt. Der Deckel 102 wird nachfolgend zum Freigeben der Dachöffnung 126 relativ zum Ausstellhebel 106 weiter in die X-Richtung verschoben. Dazu ist der Ausstellhebel 106 mittels eines Koppelelements 117 mit dem Deckel 102 gekoppelt, insbesondere mit einem Deckelträger oder Deckelhalter. Das Koppelelement 117 ermöglicht eine Relativbewegung zwischen dem Deckel 102 und dem Ausstellhebel 106.

Das Koppelelement 117 ist an einem ersten Ende 118 des Ausstellhebels 106 angeordnet. Das zweite Führungselement 109 und das dritte Führungselement 111 sind an einem gegenüberliegenden zweiten Ende 119 des Ausstellhebels 106 angeordnet. Das Drehlager 113 und das erste Führungselement 107 sind zwischen dem Koppelelement 117 und dem zweiten sowie dritten Führungselement 109 und 111 angeordnet. Das erste Führungselement 107 ist zwischen dem ersten Ende 118 und den zweiten Ende 119 in einem mittleren Bereich des Ausstellhebels 106 angeordnet.

Beim Schließen des Deckels ausgehend von der Lüfterstellung in Figur 8 gezeigt zur Schließposition wie in Figur 4 gezeigt ermöglicht die erste Kulisse 108 zusammen mit dem ersten Führungselement 107 ein Auswirken einer Kraft auf den Deckel 102 entgegen der Z-Richtung. Somit kann der Deckel 102 verlässlich auch gegen einen Druck der Dichtungen vollständig geschlossen werden.

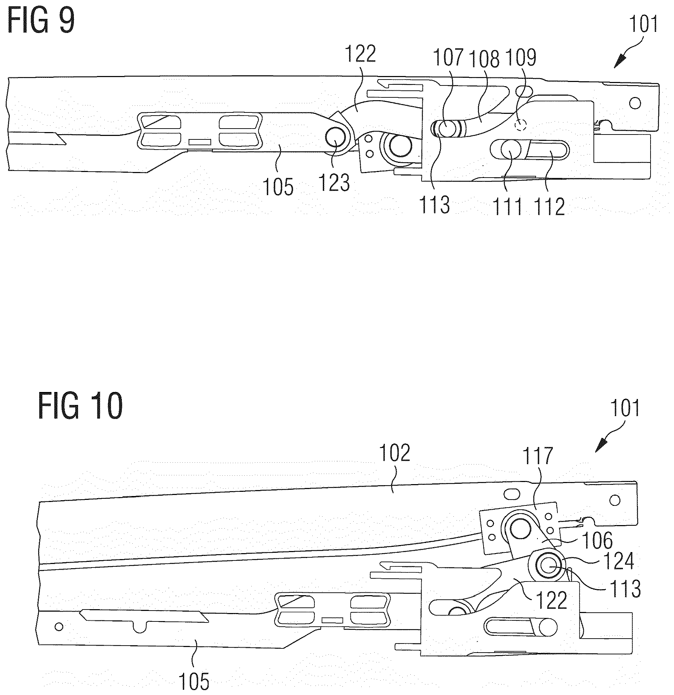

Figuren 9 und 10 zeigen die Anordnung 101 gemäß einem weiteren Ausführungsbeispiel. Diese entspricht im Wesentlichen den bisher beschriebenen Ausführungsbeispielen. Im Unterschied zu den bisher beschriebenen Ausführungsbeispielen ist der Ausstellhebel 106 nicht direkt mit der Ausstellstange 105 verbunden, sondern mittels eines Zwischenhebels 122. Der Zwischenhebel 122 ist mit einem ersten Ende 123 mit der Ausstellstange 105 schwenkbar gekoppelt. Ein gegenüberliegendes zweites Ende 124 des Zwischenhebels 122 ist an dem Drehlager 113 und dem ersten Führungselement 107 mit dem Ausstellhebel 106 verbunden. Somit ist es möglich, die Ausstellstange 105 während der Bewegung entlang der X-Richtung nicht relativ zu der Führungsschiene 104 zu verschwenken. Lediglich der Zwischenhebel 122 wird während dem Ausstellen des Ausstellhebels 106 verschwenkt. Ansonsten entspricht die Führung des Ausstellhebels 106 in den ortfesten Kulissen 108, 110 und 112 dem vorher beschriebenen.

Allgemein ermöglicht die Führung des Ausstellhebels 106 in den drei Kulissen 108, 110 und 112 eine drehbare Kopplung des Ausstellhebels 106 mit der Ausstellstange 105 an dem Drehlager 113, entweder unmittelbar wie in Verbindung mit den Figuren 2 bis 8 beschrieben oder mittelbar wie in Verbindung mit den Figuren 9 und 10 beschrieben. Auf eine Kulissenbahn an der Ausstellstange 105 zur Kopplung mit dem Ausstellhebel 106 kann daher verzichtet werden. Die Verschiebung des Ausstellhebels 106 entlang der X-Richtung während dem Verschwenken relativ zur Führungsschiene 104 ermöglicht einen Ausgleich von Toleranzen und eine flache Kulissensteigung im Abschnitt 116.

Aufgrund der Kopplung des Ausstellhebels 106 mit der Ausstellstange 105 mittels des Drehlagers 113 ist es außerdem möglich, die Führungsschiene ohne Fräsen im hinteren Bereich herzustellen. In der ausgeschwenkten Position des Ausstellhebels 106 wie beispielsweise in den Figuren 8 und 10 dargestellt steht die Ausstellstange 105 vergleichsweise wenig in X-Richtung über. Somit wird an der Hinterkante 107 weniger Bauraum für den Überstand der Ausstellstange 105 benötigt. Dies ermöglicht beispielsweise einen Bauraumgewinn von bis zu 10 mm. Folglich ist eine vergleichsweise große Freigabe der Dachöffnung 126 bei vollständig geöffnetem Deckel 102 möglich.

Durch die feste Anbindung der Ausstellstange 105 an dem Ausstellhebel 106 und die Führung in der ersten Kulisse 108 wird eine plötzliche Laständerung während dem Ausschwenken des Ausstellhebels 106 vermieden. Zudem ist eine Führung der Ausstellstange 105 in der Y-Richtung möglich. Auf zusätzliche Bremselemente, wie eine Gummibremse, zur Vermeidung der Laständerung kann verzichtet werden. Zudem kann auf eine separate Ausstellkulisse für die Ausstellstange und Schienenbefräsungen hierfür verzichtet werden. Somit ist ein einfacher und sicherer Betrieb der Anordnung 101 möglich.

## Patentansprüche

1. Anordnung mit einem Deckel (102) für ein Fahrzeugdach (103), aufweisend:
- eine Führungsschiene (104), die sich entlang einer Fahrzeuglängsrichtung (x) erstreckt,
- eine Ausstellstange (105), die relativ zu der Führungsschiene (104) entlang der Fahrzeuglängsrichtung (x) verschiebbar ist,
- einen bezüglich der Fahrzeuglängsrichtung (X) hinteren Ausstellhebel (106), der schwenkbar mit dem Deckel (102) gekoppelt ist, und der
- mit einem ersten Führungselement (107) in einer ersten bezüglich der Führungsschiene (104) ortsfesten Kulisse (108) geführt ist,
- mit einem zweiten Führungselement (109) in einer zweiten bezüglich der Führungsschiene (104) ortsfesten Kulisse (110) geführt ist,
**gekennzeichnet dadurch, dass** der Ausstellhebel (106):
- das erste Führungselement (107), das zweite Führungselement (109) und ein drittes Führungselement (111) aufweist, wobei der Ausstellhebel (106):
- mit dem dritten Führungselement (111) in einer dritten bezüglich der Führungsschiene (104) ortsfesten Kulisse (112) geführt ist,
- mit der Ausstellstange (105) mittels eines Drehlagers (113) gekoppelt ist.

2. Anordnung nach Anspruch 1, bei der die erste Kulisse (108) einen Verlauf aufweist, bei dem sich ein Abstand (114) zwischen der ersten Kulisse (108) und einem Boden (115) der Führungsschiene in der Fahrzeuglängsrichtung (x) nach hinten in einem Abschnitt (116) vergrößert.

3. Anordnung nach Anspruch 1 oder 2, bei der die zweite Kulisse (110) einen Verlauf aufweist, der in der Fahrzeuglängsrichtung (x) nach hinten zunächst gleichgerichtet zur Fahrzeuglängsrichtung (X) verläuft und dann schräg zur Fahrzeuglängsrichtung (X).

4. Anordnung nach einem der Ansprüche 1 bis 3, bei der die dritte Kulisse (112) einen Verlauf aufweist, der gleichgerichtet zur Fahrzeuglängsrichtung (X) verläuft.

5. Anordnung nach einem der Ansprüche 1 bis 4, bei der
- der Ausstellhebel (106) mittels eines Koppelelements (117) schwenkbar mit dem Deckel (102) gekoppelt ist,
- der Ausstellhebel (106) ein erstes (118) und ein gegenüberliegendes zweites (119) Ende aufweist,
- wobei das Koppelelement (117) an dem ersten Ende (118) angeordnet ist, und das zweite (109) und das dritte (111) Führungselement an dem zweiten Ende (119).

6. Anordnung nach einem der Ansprüche 1 bis 5, bei der eine Drehachse (120) des Drehlagers (113) und eine Längsachse (121) des ersten Führungselements (107) gleich sind.

7. Anordnung nach einem der Ansprüche 1 bis 6, bei der die Ausstellstange (105) mittels des ersten Führungselements (107) in der ersten Kulisse (108) geführt ist.

8. Anordnung nach einem der Ansprüche 1 bis 7, bei der die Ausstellstange (105) relativ zur Führungsschiene (104) verschwenkbar ist.

9. Anordnung nach einem der Ansprüche 1 bis 8, bei der das erste (107), das zweite (109) und das dritte (111) Führungselement jeweils Bolzen-förmig ausgebildet sind.

10. Anordnung nach einem der Ansprüche 1 bis 9, bei der das dritte Führungselement (111) und die dritte Kulisse (112) so ausgebildet sind, dass der Ausstellhebel (106) relativ zu der Führungsschiene (104) verschwenkbar ist und dabei entlang der Fahrzeuglängsrichtung (X) verschiebbar ist.

11. Anordnung nach einem Ansprüche 1 bis 10, aufweisend einen Zwischenhebel (122), der an einem Ende (123) mit der Ausstellstange (105) drehbar gekoppelt ist und einem gegenüberliegenden Ende (124) an dem Drehlager (113) mit dem Ausstellhebel (106) gekoppelt ist.

12. Anordnung nach einem der Ansprüche 1 bis 11, bei der die dritte Kulisse (112) einen hinteren Anschlag (125) für das dritte Führungselement (111) aufweist, um eine Bewegung des dritten Führungselements (111) in die Fahrzeuglängsrichtung (x) zu begrenzen.

13. Anordnung nach einem der Ansprüche 1 bis 12, bei der der Deckel (102) relativ zu dem Ausstellhebel (106) entlang der Fahrzeuglängsrichtung (X) verschiebbar ist.

## Claims

1. Arrangement with a cover (102) for a vehicle roof (103), having:
- a guide rail (104) which extends along a vehicle longitudinal direction (x),
- a raising rod (105) which is displaceable along the vehicle longitudinal direction (x) relative to the guide rail (104),
- a rear raising lever (106) with respect to the vehicle longitudinal direction (X), which is coupled pivotably to the cover (102), and which
- is guided with a first guide element (107) in a first slotted link (108) which is fixed in position with respect to the guide rail (104),
- is guided with a second guide element (109) in a second slotted link (110) which is fixed in position with respect to the guide rail (104),
**characterized in that** the raising lever (106):
- has the first guide element (107), the second guide element (109) and a third guide element (111), wherein the raising lever (106):
- is guided with the third guide element (111) in a third slotted link (112) which is fixed in position with respect to the guide rail (104), and
- is coupled to the raising rod (105) by means of a rotary bearing (113).

2. Arrangement according to Claim 1, in which the first slotted link (108) has a profile in which a distance (114) between the first slotted link (108) and a base (115) of the guide rail increases rearward in the vehicle longitudinal direction (x) in a section (116).

3. Arrangement according to Claim 1 or 2, in which the second slotted link (110) has a profile which, rearward in the vehicle longitudinal direction (x), first of all runs in the same direction as the vehicle longitudinal direction (X) and then obliquely with respect to the vehicle longitudinal direction (X).

4. Arrangement according to one of Claims 1 to 3, in which the third slotted link (112) has a profile which runs in the same direction as the vehicle longitudinal direction (X).

5. Arrangement according to one of Claims 1 to 4, in which
- the raising lever (106) is coupled pivotably to the cover (102) by means of a coupling element (117),
- the raising lever (106) has a first end (118) and an opposite second end (119),
- wherein the coupling element (117) is arranged at the first end (118), and the second guide element (109) and the third guide element (111) are arranged at the second end (119).

6. Arrangement according to one of Claims 1 to 5, in which an axis of rotation (120) of the rotary bearing (113) and a longitudinal axis (121) of the first guide element (107) are identical.

7. Arrangement according to one of Claims 1 to 6, in which the raising rod (105) is guided in the first slotted link (108) by means of the first guide element (107).

8. Arrangement according to one of Claims 1 to 7, in which the raising rod (105) is pivotable relative to the guide rail (104).

9. Arrangement according to one of Claims 1 to 8, in which the first guide element (107), the second guide element (109) and the third guide element (111) are each of bolt-shaped design.

10. Arrangement according to one of Claims 1 to 9, in which the third guide element (111) and the third slotted link (112) are designed in such a manner that the raising lever (106) is pivotable relative to the guide rail (104) and in the process is displaceable along the vehicle longitudinal direction (X).

11. Arrangement according to one of Claims 1 to 10, having an intermediate lever (122) which is coupled rotatably at one end (123) to the raising rod (105) and is coupled at an opposite end (124) on the rotary bearing (113) to the raising lever (106).

12. Arrangement according to one of Claims 1 to 11, in which the third slotted link (112) has a rear stop (125) for the third guide element (111) in order to limit a movement of the third guide element (111) in the vehicle longitudinal direction (x).

13. Arrangement according to one of Claims 1 to 12, in which the cover (102) is displaceable along the vehicle longitudinal direction (X) relative to the raising lever (106) .

## Revendications

1. Agencement comportant un panneau (102) pour un toit de véhicule (103), comprenant :
- un rail de guidage (104) qui s'étend le long d'une direction longitudinale de véhicule (X),
- une tige de relevage (105) qui est déplaçable par rapport au rail de guidage (104) le long de la direction longitudinale de véhicule (X),
- un levier de relevage (106) arrière par rapport à la direction longitudinale de véhicule (X), lequel levier est accouplé de manière pivotante au panneau (102), et lequel
- est guidé à l'aide d'un premier élément de guidage (107) dans une première coulisse (108) fixe par rapport au rail de guidage (104),
- est guidé à l'aide d'un deuxième élément de guidage (109) dans une deuxième coulisse (110) fixe par rapport au rail de guidage (104),
**caractérisé en ce que** le levier de relevage (106) :
- comprend le premier élément de guidage (107), le deuxième élément de guidage (109) et un troisième élément de guidage (111), le levier de relevage (106) :
- étant guidé à l'aide du troisième élément de guidage (111) dans une troisième coulisse (112) fixe par rapport au rail de guidage (104),
- étant accouplé à la tige de relevage (105) au moyen d'un palier rotatif (113).

2. Agencement selon la revendication 1, dans lequel la première coulisse (108) présente une allure dans laquelle une distance (114) entre la première coulisse (108) et un fond (115) du rail de guidage augmente vers l'arrière dans la direction longitudinale de véhicule (X) dans une partie (116).

3. Agencement selon la revendication 1 ou 2, dans lequel la deuxième coulisse (110) présente une allure qui, vers l'arrière dans la direction longitudinale de véhicule (X), s'étend tout d'abord dans la même direction que la direction longitudinale de véhicule (X) puis de manière oblique par rapport à la direction longitudinale de véhicule (X).

4. Agencement selon l'une des revendications 1 à 3, dans lequel la troisième coulisse (112) présente une allure qui s'étend dans la même direction que la direction longitudinale de véhicule (X).

5. Agencement selon l'une des revendications 1 à 4, dans lequel
- le levier de relevage (106) est accouplé de manière pivotante au panneau (102) au moyen d'un élément d'accouplement (117),
- le levier de relevage (106) comprend une première (118) et une deuxième extrémité opposée (119),
- l'élément d'accouplement (117) étant disposé à la première extrémité (118), et le deuxième (109) et le troisième (111) élément de guidage étant disposés à la deuxième extrémité (119).

6. Agencement selon l'une des revendications 1 à 5, dans lequel un axe de rotation (120) du palier rotatif (113) et un axe longitudinal (121) du premier élément de guidage (107) sont identiques.

7. Agencement selon l'une des revendications 1 à 6, dans lequel la tige de relevage (105) est guidée dans la première coulisse (108) au moyen du premier élément de guidage (107).

8. Agencement selon l'une des revendications 1 à 7, dans lequel la tige de relevage (105) est pivotante par rapport au rail de guidage (104).

9. Agencement selon l'une des revendications 1 à 8, dans lequel le premier (107), le deuxième (109) et le troisième (111) élément de guidage sont réalisés respectivement en forme de boulon.

10. Agencement selon l'une des revendications 1 à 9, dans lequel le troisième élément de guidage (111) et la troisième coulisse (112) sont réalisés de telle sorte que le levier de relevage (106) est pivotant par rapport au rail de guidage (104) et en l'occurrence est déplaçable le long de la direction longitudinale de véhicule (X).

11. Agencement selon l'une des revendications 1 à 10, comprenant un levier intermédiaire (122) qui est accouplé de manière rotative à une extrémité (123) à la tige de relevage (105) et est accouplé de manière rotative, à une extrémité opposée (124) au niveau du palier rotatif (113), au levier de relevage (106).

12. Agencement selon l'une des revendications 1 à 11, dans lequel la troisième coulisse (112) comprend une butée arrière (125) pour le troisième élément de guidage (111), afin de limiter un mouvement du troisième élément de guidage (111) dans la direction longitudinale de véhicule (X).

13. Agencement selon l'une des revendications 1 à 12, dans lequel le panneau (102) est déplaçable par rapport au levier de relevage (106) le long de la direction longitudinale de véhicule (X).
